# EUROPÄISCHE PATENTSCHRIFT

(11) **EP 3 707 044 B1**
(45) Veröffentlichungstag und Bekanntmachung des Hinweises auf die Patenterteilung: **18.05.2022**
(21) Anmeldenummer: 18796372.3
(22) Anmeldetag: 17.10.2018
(51) Int. Cl.: B60W 30/12, B60W 30/16, G05D 1/00, B60W 50/00

(54) **SYSTEM ZUM AUTOMATISIERTEN FAHREN MIT UNTERSTÜTZUNG EINES FAHRERS BEIM AUSÜBEN EINER FAHRFREMDEN TÄTIGKEIT**
SYSTEM FOR AUTOMATED DRIVING WITH ASSISTANCE FOR A DRIVER IN PERFORMING A NON-DRIVING ACTIVITY
SYSTÈME DE CONDUITE AUTOMATISÉE AVEC ASSISTANCE À UN CONDUCTEUR LORS DE LA PRATIQUE D'UNE ACTIVITÉ ÉTRANGÈRE À LA CONDUITE

(30) Priorität: 09.11.2017 DE 102017219955
(43) Veröffentlichungstag der Anmeldung: 16.09.2020
(73) Patentinhaber: Continental Automotive GmbH, 30165 Hannover (DE)
(72) Erfinder: WANNEMACHER, Christoph, 64390 Erzhausen (DE); CIELER, Stephan, 60316 Frankfurt (DE)
(74) Vertreter: Continental Corporation
(86) Internationale Anmeldenummer: PCT/EP2018/078391
(87) Internationale Veröffentlichungsnummer: WO 2019/091729

(56) Entgegenhaltungen:
- EP-A1- 3 192 695
- DE-A1-102014 106 241
- DE-A1-102014 214 078
- DE-A1-102015 205 580

## Beschreibung

Die Erfindung betrifft ein System zum automatisierten Fahren mit Unterstützung eines Fahrers beim Ausüben einer fahrfremden Tätigkeit.

Ein System zum automatisierten Fahren ermöglicht die autonome Steuerung eines Fahrzeugs, wobei der Fahrer in Abhängigkeit vom Automatisierungsgrad, in dem sich das System befindet, während des autonomen Fahrens fahrfremde Tätigkeiten ausüben kann. Der Fahrer kann sich somit während des autonomen Fahrens des Systems in eine fahrfremde Tätigkeit, die seine volle Aufmerksamkeit erfordert beziehungsweise einen hohen Immersionsgrad aufweist, vertiefen. Beispielsweise kann der Fahrer eine E-Mail oder eine sonstige Nachricht auf einem Tablet oder Smartphone lesen oder schreiben.

In dem Dokument EP 3 192 695 A1 ist ein Verfahren zum Betreiben eines Kraftfahrzeuges mit einer zumindest teilweisen Automatisierung der Fahrzeugsteuerung offenbart, wobei eine Übergangsstrategie für den Übergang zwischen dem zumindest teilweise automatisierten Fahrmodus und einem manuellen Fahrmodus in Abhängigkeit von wenigstens eines für einen aktuellen Status des Fahrers charakteristischen Parameters angepasst wird.

Aus DE 10 2014 218 526 A1 sind u.a. ein System und ein Verfahren bekannt, bei denen auf Basis einer Positionsänderung einer Lenkvorrichtung, eines Gaspedals oder einer Bremse der autonome Betrieb des Fahrzeuges modifiziert und gegebenenfalls beendet wird.

Aus US 2014/0303827 A1 sind u.a. Systeme und Verfahren bekannt, bei welchen auf Basis einer Bestimmung des Fahrzeugzustandes eine Strategie zur Übertragung der Fahrzeugsteuerung vom automatisierten Fahrmodus in den manuellen Fahrmodus ermittelt und entsprechende Instruktionen für den Übergang vom automatisierten Fahrmodus in den manuellen Fahrmodus erzeugt werden.

In dem Dokument DE 10 2015 205 580 A wird bei einem Verfahren zum mindestens teilautomatisierten Fahren in einem Fahrzeug die Beendigung der automatisierten Fahrfunktion und die mindest teilweise Übergabe der Fahrzeugkontrolle an den Fahrer erst nach dem Verstreichen einer Übernahmezeitspanne durchgeführt, die aus der Betätigung eines mit dem Fahrzeug kommunizierenden Geräts durch den Fahrer ermittelt wird.

In der US 2014/0244096 A1 wird ein System zum autonomen Fahren in einem Fahrzeug beschrieben, bei dem der aktuelle Fahrerzustand anhand von Fahreraktivitäten bestimmt und hieraus ein Fahrerrisikoindex ermittelt wird, der in einer Fahrkontrolleinheit zur Ansteuerung verschiedener Fahrzustände herangezogen wird. In der Fahrkontrolleinheit kann in Abhängigkeit des Fahrerrisikoindex das Fahrzeug teilautonom oder vollständig autonom geführt werden. Um beispielsweise von einem vollautonomen Fahrzustand zu einem teilautonomen Fahrzustand zurückzukehren, wird der Fahrer von dem System über ein Signal zur Übernahme der Fahrzeugsteuerung aufgefordert.

Es werden beim automatisierten Fahren immer wieder Situationen auftreten, in denen das System zum automatisierten Fahren die Steuerung des Fahrzeugs an den Fahrer übergeben muss. Dies tritt beispielsweise dann ein, wenn eine Verkehrssituation von dem System zum automatisierten Fahren nicht ohne Hilfe des Fahrers gemeistert werden kann. Das System zum automatisierten Fahren fordert in diesem Fall den Fahrer auf, die Fahraufgabe zu übernehmen.

Es sei nun angenommen, dass eine derartige Aufforderung von dem System an den Fahrer zu einem Zeitpunkt ergeht, zu dem der Fahrer seine fahrfremde Tätigkeit noch nicht abgeschlossen hat. Untersuchungsergebnisse zeigen, dass sich eine deutliche Tendenz ergibt, eine unterbrochene Handlung wieder aufzunehmen, wenn das Handlungsziel vorher noch nicht erreicht wurde (Ovsiankina-Effekt). Übertragen auf das automatisierte Fahren, bedeutet dies, dass der Fahrer die Fahraufgabe zwar möglicherweise in der Tat übernimmt. Nichtsdestotrotz ist der Fahrer sowohl gedanklich als auch blickmotorisch noch immer mit seiner nicht abgeschlossenen fahrfremden Tätigkeit befasst. Der Fahrer versucht somit, seine Tätigkeit zum Abschluss zu bringen, obwohl/während er das Fahrzeug steuert. Dies führt dazu, dass der Fahrer von der eigentlichen Fahraufgabe abgelenkt ist und sich nicht ausreichend auf den Straßenverkehr konzentriert, sodass das Risiko eines Unfalls erhöht ist. Heutige Systeme brechen nach der Übergabe der Steuerungsfunktion an den Fahrer die ausgeübte Tätigkeit ab.

Ein Anliegen der vorliegenden Erfindung ist es, ein System zum automatisierten Fahren mit Unterstützung eines Fahrers beim Ausüben einer fahrfremden Tätigkeit anzugeben, sodass der Fahrer trotz der Übernahme der Fahrzeugkontrolle eine bereits angefangene fahrfremde Tätigkeit nach Möglichkeit weitestgehend zu Ende führen kann, wobei gleichzeitig das Risiko eines Unfalls aufgrund von Ablenkung oder Unkonzentriertheit reduziert ist.

Eine Ausführungsform eines Systems zum automatisierten Fahren mit Unterstützung eines Fahrers beim Ausüben einer fahrfremden Tätigkeit, wenn das System vom automatisierten Fahren in den manuellen Fahrbetrieb durch den Fahrer umschaltet, ist im Patentanspruch 1 angegeben.

Gemäß einer möglichen Ausführungsform des Systems zum automatisierten Fahren mit Unterstützung des Fahrers beim Ausüben einer fahrfremden Tätigkeit umfasst das System eine Assistenzeinrichtung zum Unterstützen des Fahrers beim Ausüben der fahrfremden Tätigkeit. Das System zum automatisierten Fahren ist derart ausgebildet, dass das System in einem ersten Betriebszustand das Fahrzeug automatisiert steuert und das System in einem zweiten Betriebszustand (manueller Betriebszustand) das Steuern des Fahrzeugs an den Fahrer übergibt. Die Assistenzeinrichtung ist derart ausgebildet, dass sie den Fahrer bei der Ausübung der fahrfremden Tätigkeit unterstützt, wenn das System zum automatisierten Fahren von dem ersten Betriebszustand, das heißt von dem automatisierten Fahren, in den zweiten Betriebszustand, das heißt in den manuellen Fahrbetrieb durch den Fahrer, umschaltet.

Die Assistenzeinrichtung unterstützt den Fahrer dabei derart, dass die Konzentration des Fahrers auf den Straßenverkehr beziehungsweise die Steuerung des Fahrzeugs möglichst wenig beeinträchtigt wird, während die fahrfremde Tätigkeit fortgesetzt beziehungsweise beendet wird. Das System ermöglicht dem Fahrer somit mittels der Assistenzeinrichtung, abgebrochene Tätigkeiten nach der Übergabe vom autonomen Fahren zum manuellen Fahren abschließen zu können, ohne die Aufmerksamkeit und Konzentration auf das Fahren und somit auf das Straßenumfeld zu verlieren.

Gemäß einer möglichen Ausführungsform kann der Assistent mit Hilfe einer Sensorik und/oder Algorithmik erkennen, dass der Fahrer seine fahrfremde Tätigkeit bei der Übernahme der manuellen Steuerung des Fahrzeugs noch nicht abschließen konnte. Das System und insbesondere die Assistenzeinrichtung bietet dem Fahrer dann proaktiv an, ihn beim Beenden der fahrfremden Tätigkeit zu unterstützen, ohne dass der Fahrer dabei seine Aufmerksamkeit vom Straßenverkehr abwenden muss. Die Assistenzeinrichtung kann mit einer Lernfunktion (lernender Assistent) ausgestaltet sein. Die Assistenzeinrichtung lernt über die Zeit das Nutzungsverhalten und die Präferenzen des Anwenders und stellt eine personalisierte Strategie zur Beendigung der fahrfremden Tätigkeit zur Verfügung.

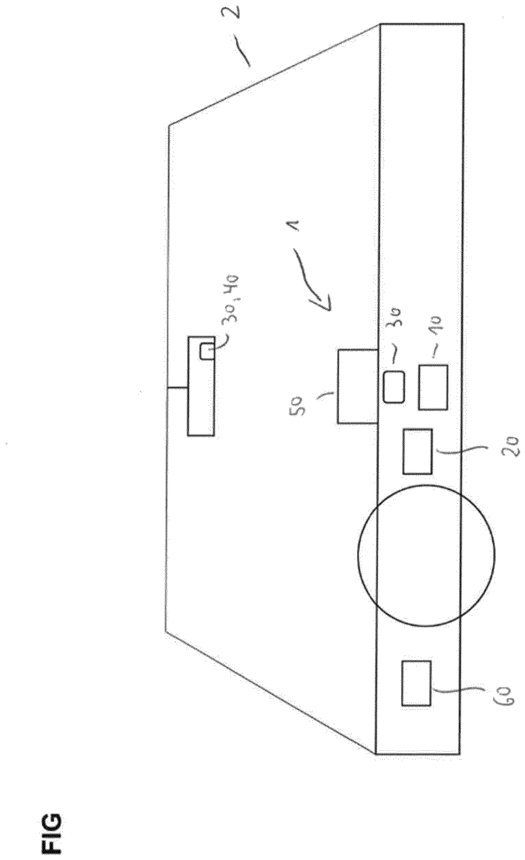

Die Erfindung wird im Folgenden anhand einer Figur, durch die Ausführungsformen der vorliegenden Erfindung verdeutlicht werden, näher erläutert. Die Figur zeigt den Innenraum eines Fahrzeugs mit einem System zum automatisierten Fahren mit Unterstützung eines Fahrers beim Ausüben einer fahrfremden Tätigkeit.

Ein System 1 zum automatisierten Fahren eines Fahrzeugs 2 mit Unterstützung eines Fahrers beim Ausüben einer fahrfremden Tätigkeit umfasst eine Assistenzeinrichtung 10. Die Assistenzeinrichtung 10 ist zum Unterstützen des Fahrers beim Ausüben der fahrfremden Tätigkeit ausgebildet. Das System 1 zum automatisierten Fahren kann in einem ersten Betriebszustand betrieben werden, in dem das System das Fahrzeug 2 automatisiert steuert. In einem zweiten Betriebszustand des Systems 1 zum automatisierten Fahren übergibt das System das Steuern des Fahrzeugs 2 an den Fahrer. Die Assistenzeinrichtung 10 ist derart ausgebildet, dass sie den Fahrer bei der Ausübung der fahrfremden Tätigkeit unterstützt, wenn das System 1 zum automatisierten Fahren von dem ersten Betriebszustand, das heißt dem autonomen Fahrzustand, in den zweiten Betriebszustand, das heißt das manuelle Steuern des Fahrzeugs durch den Fahrer, umschaltet.

Gemäß einer möglichen Ausführungsform umfasst das System eine Eingabeeinrichtung 20 zur Eingabe einer Anweisung zur Unterstützung des Fahrers beim Ausüben der fahrfremden Tätigkeit. Das System kann primär sprachgesteuert sein. Die Eingabeeinrichtung 20 kann beispielsweise ein Mikrofon sein, in das der Fahrer eine Anweisung zur Unterstützung bei dem Ausüben der fahrfremden Tätigkeit eingibt. Die Assistenzeinrichtung 10 ist derart ausgebildet, dass sie den Fahrer bei der Ausübung der fahrfremden Tätigkeit unterstützt, wenn die Anweisung von dem Fahrer in die Eingabeeinrichtung 20, insbesondere das Mikrofon, eingegeben worden ist.

Gemäß einer möglichen Ausführungsform ist die Assistenzeinrichtung 10 derart ausgebildet, dass die Assistenzeinrichtung 10 dem Fahrer die Unterstützung bei der Ausübung der fahrfremden Tätigkeit anbietet, wenn das System 1 zum automatisierten Fahren von dem ersten Betriebszustand (autonomer Fahrbetrieb) in den zweiten Betriebszustand (manueller Fahrbetrieb) umschaltet. Der Fahrer hat dann die Möglichkeit, das Angebot der Assistenzeinrichtung 10, ihn bei der Ausübung der fahrfremden Tätigkeit zu unterstützen, während er das Fahrzeug steuert, anzunehmen oder abzulehnen.

Gemäß einer weiteren möglichen Ausführungsform kann das System 1 zum automatisierten Fahren eine Sensoreinrichtung 30 zum Erkennen einer Tätigkeit des Fahrers aufweisen. Die Assistenzeinrichtung 10 ist derart ausgebildet, dass sie den Fahrer bei dem Ausüben der fahrfremden Tätigkeit unterstützt, wenn das System 1 beim automatisierten Fahren von dem ersten Betriebszustand (autonomer Betriebszustand) in den zweiten Betriebszustand (manueller Betriebszustand) umschaltet.

Die Sensoreinrichtung 30 kann beispielsweise eine Kamera 40 zur Aufnahme eines Bildes, das eine momentane Tätigkeit des Fahrers zeigt, aufweisen. Bei der in der Figur gezeigten Ausführungsform kann diese Kamera 40 zum Beispiel im Fahrzeugspiegel im Innenraum des Fahrzeugs montiert sein. Die Assistenzeinrichtung 10 ist bei dieser Ausführungsform derart ausgebildet, dass sie das aufgenommene Bild der Kamera auswerten kann und die Tätigkeit des Fahrers erkennt. In Abhängigkeit von der erkannten Tätigkeit des Fahrers kann die Assistenzeinrichtung 10 den Fahrer bei der Ausübung der fahrfremden Tätigkeit unterstützen oder dem Fahrer diese Unterstützung zumindest anbieten.

Gemäß einer weiteren, in der Figur gezeigten möglichen Ausführungsform des Systems zum automatisierten Fahren weist das System eine Infotainment-Einrichtung 50 zum Anbieten eines Infotainment-Programms auf. Die Infotainment-Einrichtung 50 kann zum Beispiel einen Bildschirm umfassen, auf dem bestimmte Inhalte des Infotainment-Programms des Fahrzeugs dargestellt werden. Die Assistenzeinrichtung 10 ist derart ausgebildet, dass sie den Fahrer bei der Ausführung des Infotainment-Programms unterstützt, wenn das System 1 zum automatisierten Fahren von dem autonomen Betriebszustand in den manuellen Betriebszustand umschaltet. Die Sensoreinrichtung 30 kann beispielsweise mit der Infotainment-Einrichtung 50 gekoppelt sein. Die Sensoreinrichtung 30 kann dadurch eine momentane Tätigkeit des Fahrers während des automatisierten Fahrens erkennen und den Fahrer während des manuellen Fahrens bei dem Ausüben der fahrfremden Tätigkeit auf der Infotainment-Einrichtung 50 unterstützen beziehungsweise dem Fahrer diese Unterstützung anbieten.

Gemäß einer weiteren möglichen Ausführungsform kann die Assistenzeinrichtung 10 als ein lernender Assistent ausgebildet sein. Die Assistenzeinrichtung 10 kann bei dieser Ausführungsform insbesondere dazu ausgebildet sein, das Nutzungsverhalten des Fahrers in Bezug auf die Infotainment-Einrichtung 50 zu ermitteln und zu erlernen. Die Assistenzeinrichtung 10 ist insbesondere derart ausgebildet, dass sie den Fahrer in Abhängigkeit von dem erlernten Nutzungsverhalten bei der Ausführung des Infotainment-Programms unterstützt.

Im Falle eines lernenden Assistenten kann die Assistenzeinrichtung 10 insbesondere derart ausgebildet sein, dass sie das Verhalten beziehungsweise die Präferenzen des Fahrers in Bezug auf die fahrfremde Tätigkeit während des autonomen Fahrens erlernt. Die Assistenzeinrichtung 10 kann in diesem Fall den Fahrer in Abhängigkeit von dem erlernten Verhalten des Fahrers in Bezug auf die fahrfremde Tätigkeit bei dem Ausüben der fahrfremden Tätigkeit unterstützen.

Die Assistenzeinrichtung 10 kann beispielsweise dazu ausgebildet sein, bestimmte Verhaltensmuster des Fahrers zu erlernen. Wenn der Fahrer zum Beispiel während des autonomen Fahrens mit dem Lesen von Nachrichten beschäftigt war und nach der Übernahme des Steuerns des Fahrzeugs in der Vergangenheit regelmäßig das von der Assistenzeinrichtung 10 angebotene Vorlesen einer Nachricht abgelehnt hat, bietet die Assistenzeinrichtung 10 dem Fahrer zukünftig nicht mehr an, die Nachricht vorzulesen.

Die Lernfunktion der Assistenzeinrichtung kann des Weiteren derart ausgestaltet sein, dass die Assistenzeinrichtung mit zunehmender Zeit erlernt, ob ein Fahrer die Ausgabe von Nachrichten eher in schriftlicher oder mündlicher Form bevorzugt. Dementsprechend kann die Assistenzeinrichtung 10 einen Text bei dem Unterstützen des Fahrers in Bezug auf die fahrfremde Tätigkeit auf einem Bildschirm der Infotainment-Einrichtung 50 anzeigen oder den Text per Lautsprecherausgabe ausgeben.

Gemäß einer möglichen Ausführungsform kann die Assistenzeinrichtung 10 derart ausgebildet sein, dass sie den Fahrer bei dem Ausüben einer Lesetätigkeit unterstützt, wenn das System 1 zum automatisierten Fahren von dem ersten Betriebszustand (autonomer Betriebszustand) in den zweiten Betriebszustand (manueller Betriebszustand) umschaltet. Beispielsweise kann die Assistenzeinrichtung dem Fahrer (über natürliche Sprachausgabe) anbieten, einen verbleibenden Teil einer E-Mail, einer Nachricht, eines Online-Artikels, eines E-Book-Kapitels, etc. vorzulesen.

Hierbei hat der Fahrer die Möglichkeit, das Angebot (per Spracheingabe) anzunehmen. Durch Kopplung einer Kamera mit angeschlossenem Bildverarbeitungssystem, beispielsweise einem In-Car-Eye-Tracking-System, und den Kommunikationsgeräten des Fahrers (Smartphone, Tablet, etc.) kann die Assistenzeinrichtung eine entsprechende Passage in einem Text, den der Fahrer gerade gelesen hat, bestimmen. Anschließend kann diese Passage im Text per Sprachausgabe vorgelesen werden. Über natürlichen Sprachdialog hat der Fahrer jederzeit die Möglichkeit, im Text vor- und zurückzuspringen und die Sprachausgabe des Assistenten zu unterbrechen.

Gemäß einer weiteren möglichen Ausführungsform umfasst das System eine Spracheingabeeinrichtung 60 zur Spracheingabe. Die Spracheingabeeinrichtung 60 kann beispielsweise ein Mikrofon sein. Die Assistenzeinrichtung 10 ist derart ausgebildet, dass sie den Fahrer bei dem Ausüben einer Schreibtätigkeit unterstützt. Dazu ist die Assistenzeinrichtung 10 dazu ausgebildet, über die Spracheingabeeinrichtung 60 empfangene akustische Signale in geschriebenen Text umzuwandeln, wenn das System 1 zum automatisierten Fahren von dem autonomen Betriebszustand in den manuellen Betriebszustand umschaltet. Der geschriebene Text kann auf einem Bildschirm, beispielsweise auf einem Monitor der Infotainment-Einrichtung 50, angezeigt werden.

Die Assistenzeinrichtung 10 kann einem Fahrer beispielsweise anbieten, eine E-Mail beziehungsweise eine Nachricht, die der Fahrer während des autonomen Fahrbetriebs begonnen hat zu schreiben, fertigzustellen. Nimmt der Fahrer das Angebot (per Spracheingabe) an, liest die Assistenzeinrichtung beispielsweise die letzten Zeilen der bereits verfassten Nachricht vor. Anschließend kann der Fahrer den weiteren Text diktieren, sich noch einmal vorlesen lassen und schließlich absenden. Die gesamte Interaktion zwischen dem Fahrer und der Assistenzeinrichtung kann über natürlichen Sprachdialog erfolgen.

Das angegebene System ermöglicht ein sicheres Fahren nach erfolgter Übernahme der Fahraufgabe vom autonomen zum manuellen Fahren durch aktive Unterstützung eines Fahrers beim Abschluss der abgebrochenen fahrfremden Tätigkeit, ohne dass der Fahrer seine Aufmerksamkeit vom eigenständigen Fahren und somit vom Straßenumfeld abzuwenden muss. Durch die angegebene Lösung wird die Sicherheit beim Fahren erhöht, da der Fahrer seiner eigentlichen Tätigkeit, das heißt dem manuellen Fahren, nachkommt und nicht durch seine angefangene Nebentätigkeit abgelenkt ist. Das System zum automatisierten Fahren mit Unterstützung des Fahrers beim Ausüben der fahrfremden Tätigkeit kann grundsätzlich in allen Fortbewegungsmitteln eingesetzt werden. Dazu gehören neben autonom fahrenden Fahrzeugen auch Schienenfahrzeuge im Schienenverkehr, die beispielsweise einen Zugführer unterstützen können.

## Patentansprüche

1. System zum automatisierten Fahren mit Unterstützung eines Fahrers beim Ausüben einer fahrfremden Tätigkeit, wobei das System (1) zum automatisierten Fahren in einem ersten Betriebszustand das Fahrzeug (2) automatisiert steuert und in einem zweiten Betriebszustand das Steuern des Fahrzeugs an den Fahrer übergibt,
**dadurch gekennzeichnet, dass**
das System (1) eine Assistenzeinrichtung (10) zum Unterstützen des Fahrers beim Ausüben der fahrfremden Tätigkeit umfasst, und
die Assistenzeinrichtung (10) derart ausgebildet ist, dass die Assistenzeinrichtung (10) den Fahrer bei der Ausübung der fahrfremden Tätigkeit unterstützt, wenn das System (1) zum automatisierten Fahren von dem ersten Betriebszustand in den zweiten Betriebszustand umschaltet.

2. System nach Anspruch 1, umfassend:
- eine Eingabeeinrichtung (20) zur Eingabe einer Anweisung zur Unterstützung des Fahrers bei dem Ausüben der fahrfremden Tätigkeit,
- wobei die Assistenzeinrichtung (10) derart ausgebildet ist, dass die Assistenzeinrichtung (10) den Fahrer bei der Ausübung der fahrfremden Tätigkeit unterstützt, wenn die Anweisung in die Eingabeeinrichtung (20) eingegeben worden ist.

3. System nach einem der Ansprüche 1 oder 2,
wobei die Assistenzeinrichtung (10) derart ausgebildet ist, dass die Assistenzeinrichtung (10) dem Fahrer die Unterstützung bei der Ausübung der fahrfremden Tätigkeit anbietet, wenn das System (1) zum automatisierten Fahren von dem ersten Betriebszustand in den zweiten Betriebszustand umschaltet.

4. System nach einem der Ansprüche 1 bis 3, umfassend:
- eine Sensoreinrichtung (30) zum Erkennen einer Tätigkeit des Fahrers,
- wobei die Assistenzeinrichtung (10) derart ausgebildet ist, dass die Assistenzeinrichtung (10) den Fahrer bei dem Ausüben der fahrfremden Tätigkeit unterstützt, wenn das System (1) zum automatisierten Fahren von dem ersten in den zweiten Betriebszustand umschaltet.

5. System nach Anspruch 4, umfassend:
- wobei die Sensoreinrichtung (30) eine Kamera (40) zur Aufnahme eines Bildes, das eine Tätigkeit des Fahrers zeigt, aufweist,
- wobei die Assistenzeinrichtung (10) dazu ausgebildet ist, das aufgenommene Bild auszuwerten und die Tätigkeit des Fahrers zu erkennen.

6. System nach einem der Ansprüche 1 bis 5, umfassend:
- eine Infotainment-Einrichtung (50) zum Anbieten eines Infotainment-Programms,
- wobei die Assistenzeinrichtung (10) derart ausgebildet ist, dass die Assistenzeinrichtung (10) den Fahrer bei der Ausführung des Infotainment-Programms unterstützt, wenn das System (1) zum automatisierten Fahren von dem ersten in den zweiten Betriebszustand umschaltet.

7. System nach Anspruch 6,
- wobei die Assistenzeinrichtung (10) dazu ausgebildet ist, das Nutzungsverhalten des Fahrers in Bezug auf die Infotainment-Einrichtung (50) zu ermitteln und zu erlernen,
- wobei die Assistenzeinrichtung (10) derart ausgebildet ist, dass die Assistenzeinrichtung (10) den Fahrer in Abhängigkeit von dem erlernten Nutzungsverhalten bei der Ausführung des Infotainment-Programms unterstützt.

8. System nach einem der Ansprüche 1 bis 7,
- wobei die Assistenzeinrichtung (10) dazu ausgebildet ist, das Verhalten des Fahrers in Bezug auf die fahrfremde Tätigkeit während des ersten Betriebszustands des Systems (1) zum automatisierten Fahren zu erlernen,
- wobei die Assistenzeinrichtung (10) derart ausgebildet ist, dass die Assistenzeinrichtung (10) den Fahrer in Abhängigkeit von dem erlernten Verhalten des Fahrers in Bezug auf die fahrfremde Tätigkeit bei dem Ausüben der fahrfremden Tätigkeit unterstützt.

9. System nach einem der Ansprüche 1 bis 8,
wobei die Assistenzeinrichtung (10) derart ausgebildet ist, dass die Assistenzeinrichtung (10) den Fahrer bei dem Ausüben einer Lesetätigkeit unterstützt, wenn das System (1) zum automatisierten Fahren von dem ersten Betriebszustand in den zweiten Betriebszustand umschaltet.

10. System nach einem der Ansprüche 1 bis 9, umfassend:
- eine Spracheingabeeinrichtung (60),
- wobei die Assistenzeinrichtung (10) derart ausgebildet ist, dass die Assistenzeinrichtung (10) den Fahrer bei dem Ausüben einer Schreibtätigkeit unterstützt, indem über die Spracheingabeeinrichtung (60) empfangene akustische Signale in geschriebenen Text umgewandelt werden, wenn das System (1) zum automatisierten Fahren von dem ersten Betriebszustand in den zweiten Betriebszustand umschaltet.

## Claims

1. System for automated driving with assistance for a driver in performing a non-driving activity, wherein the system (1) for automated driving controls the vehicle (2) in an automated manner in a first operating state and hands over control of the vehicle to the driver in a second operating state,
**characterized in that**
the system (1) comprises an assistance device (10) for assisting the driver in performing the non-driving activity, and
the assistance device (10) is designed such that the assistance device (10) assists the driver in performing the non-driving activity if the system (1) for automated driving switches from the first operating state to the second operating state.

2. System according to Claim 1, comprising:
- an input device (20) for inputting an instruction for assisting the driver in performing the non-driving activity,
- wherein the assistance device (10) is designed such that the assistance device (10) assists the driver in performing the non-driving activity if the instruction has been input into the input device (20).

3. System according to either of Claims 1 and 2,
wherein the assistance device (10) is designed such that the assistance device (10) offers assistance to the driver in performing the non-driving activity if the system (1) for automated driving switches from the first operating state to the second operating state.

4. System according to any one of Claims 1 to 3, comprising:
- a sensor device (30) for identifying an activity of the driver,
- wherein the assistance device (10) is designed such that the assistance device (10) assists the driver in performing the non-driving activity if the system (1) for automated driving switches from the first to the second operating state.

5. System according to Claim 4,
- wherein the sensor device (30) comprises a camera (40) for acquiring an image that shows an activity of the driver,
- wherein the assistance device (10) is designed to analyse the acquired image and identify the activity of the driver.

6. System according to any one of Claims 1 to 5, comprising:
- an infotainment device (50) for offering an infotainment program,
- wherein the assistance device (10) is designed such that the assistance device (10) assists the driver in executing the infotainment program if the system (1) for automated driving switches from the first to the second operating state.

7. System according to Claim 6,
- wherein the assistance device (10) is designed to ascertain and learn the usage behaviour of the driver in relation to the infotainment device (50),
- wherein the assistance device (10) is designed such that the assistance device (10) assists the driver in executing the infotainment program according to the learned usage behaviour.

8. System according to any one of Claims 1 to 7,
- wherein the assistance device (10) is designed to learn the behaviour of the driver in relation to the non-driving activity during the first operating state of the system (1) for automated driving,
- wherein the assistance device (10) is designed such that the assistance device (10) assists the driver in performing the non-driving activity according to the learned behaviour of the driver in relation to the non-driving activity.

9. System according to any one of Claims 1 to 8,
wherein the assistance device (10) is designed such that the assistance device (10) assists the driver in performing a reading activity if the system (1) for automated driving switches from the first operating state to the second operating state.

10. System according to any one of Claims 1 to 9, comprising:
- a voice input device (60),
- wherein the assistance device (10) is designed such that the assistance device (10) assists the driver in performing a writing activity by converting acoustic signals received via the voice input device (60) into written text if the system (1) for automated driving switches from the first operating state to the second operating state.

## Revendications

1. Système de conduite automatisée avec assistance à un conducteur lors de l'exercice d'une activité non liée à la conduite, le système (1) de conduite automatisée commandant de manière automatisée le véhicule (2) dans un premier état de fonctionnement et cédant la commande du véhicule au conducteur dans un deuxième état de fonctionnement,
**caractérisé en ce que**
le système (1) comprend un moyen d'assistance (10) destiné à assister le conducteur lors de l'exercice de l'activité non liée à la conduite, et
le moyen d'assistance (10) est conçu de manière à ce que le moyen d'assistance (10) assiste le conducteur lors de l'exercice de l'activité non liée à la conduite lorsque le système (1) de conduite automatisée passe du premier état de fonctionnement au deuxième état de fonctionnement.

2. Système selon la revendication 1, comprenant :
- un moyen d'entrée (20) destiné à entrer une instruction pour assister le conducteur lors de l'exercice de l'activité non liée à la conduite,
- le moyen d'assistance (10) étant conçu de manière à ce que le moyen d'assistance (10) assiste le conducteur lors de l'exercice de l'activité non liée à la conduite lorsque l'instruction a été entrée dans le moyen d'entrée (20).

3. Système selon l'une des revendications 1 et 2,
le moyen d'assistance (10) étant conçu de manière à ce que le moyen d'assistance (10) offre au conducteur une assistance lors l'exercice de l'activité non liée à la conduite lorsque le système (1) de conduite automatisée passe du premier état de fonctionnement au deuxième état de fonctionnement.

4. Système selon l'une des revendications 1 à 3, comprenant :
- un moyen capteur (30) destiné à détecter une activité du conducteur,
- le moyen d'assistance (10) étant conçu de manière à ce que le moyen d'assistance (10) assiste le conducteur lors de l'exercice de l'activité non liée à la conduite lorsque le système (1) de conduite automatisée passe du premier état de fonctionnement au deuxième état de fonctionnement.

5. Système selon la revendication 4 :
- le moyen capteur (30) comportant une caméra (40) destinée à acquérir une image qui montre une activité du conducteur,
- le moyen d'assistance (10) étant conçu pour évaluer l'image acquise et pour détecter l'activité du conducteur.

6. Système selon l'une des revendications 1 à 5, comprenant :
- un moyen d'info-divertissement (50) destiné à proposer un programme d'info-divertissement,
- le moyen d'assistance (10) étant conçu de manière à ce que le moyen d'assistance (10) assiste le conducteur lors de l'exercice du programme d'info-divertissement lorsque le système (1) de conduite automatisée passe du premier état de fonctionnement au deuxième état de fonctionnement.

7. Système selon la revendication 6,
- le moyen d'assistance (10) étant conçu pour déterminer et apprendre le comportement d'utilisation du conducteur par rapport au moyen d'info-divertissement (50),
- le moyen d'assistance (10) étant conçu de manière à ce que le moyen d'assistance (10) assiste le conducteur en fonction du comportement d'utilisation appris lors de l'exercice du programme d'info-divertissement.

8. Système selon l'une des revendications 1 à 7,
- le moyen d'assistance (10) étant conçu pour apprendre le comportement du conducteur par rapport à l'activité non liée à la conduite lors du premier état de fonctionnement du système (1) de conduite automatisée,
- le moyen d'assistance (10) étant conçu de manière à ce que le moyen d'assistance (10) assiste le conducteur en fonction du comportement appris du conducteur par rapport à l'activité non liée à la conduite lors de l'exercice de l'activité non liée à la conduite.

9. Système selon l'une des revendications 1 à 8,
le moyen d'assistance (10) étant conçu de manière à ce que le moyen d'assistance (10) assiste le conducteur lors de l'exercice d'une activité de lecture lorsque le système (1) de conduite automatisée passe du premier état de fonctionnement au deuxième état de fonctionnement.

10. Système selon l'une des revendications 1 à 9, comprenant :
- un moyen d'entrée vocale (60),
- le moyen d'assistance (10) étant conçu de manière à ce que le moyen d'assistance (10) assiste le conducteur lors de l'exercice d'une activité d'écriture en convertissant les signaux acoustiques reçus via le moyen d'entrée vocale (60) en texte écrit lorsque le système (1) de conduite automatisée passe du premier état de fonctionnement au deuxième état de fonctionnement.
